(19) Europäisches Patentamt
European Patent Office
Office européen des brevets

(11) **EP 2 511 890 B1**

(12) **EUROPÄISCHE PATENTSCHRIFT**

(45) Veröffentlichungstag und Bekanntmachung des Hinweises auf die Patenterteilung:
**15.01.2014 Patentblatt 2014/03**

(51) Int Cl.:
*G08C 17/02* (2006.01)      *G01D 5/48* (2006.01)
*H04L 12/28* (2006.01)

(21) Anmeldenummer: **11193168.9**

(22) Anmeldetag: **13.12.2011**

(54) **Bedieneinheit**

Operating unit

Unité de commande

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **14.04.2011 DE 102011002050**

(43) Veröffentlichungstag der Anmeldung:
**17.10.2012 Patentblatt 2012/42**

(73) Patentinhaber: **Insta Elektro GmbH**
**58509 Lüdenscheid (DE)**

(72) Erfinder:
• **Mundinger, Harald**
  **58849 Herscheid (DE)**
• **Groll, Roland**
  **58515 Lüdenscheid (DE)**

(56) Entgegenhaltungen:
**EP-A2- 2 112 641      US-A1- 2009 241 052**
**US-A1- 2010 182 160**

**Beschreibung**

Die vorliegende Erfindung geht von einer gemäß Oberbegriff des Hauptanspruches konzipierten Bedieneinheit aus.

Derartige Bedieneinheiten sind in der Regel dafür vorgesehen, eine Vielzahl von in Gebäuden installierte elektrische Aktoren (Jalousieantriebe, Beleuchtungseinrichtungen, Fühler, Wächter usw.) bedarfsgerecht zu beeinflussen. Zu diesem Zweck sind die unterschiedlichsten Bedieneinheiten wie Schalter, Taster, Dimmer usw. bekannt geworden. Zur Beeinflussung werden üblicherweise vom Benutzer an den Bedieneinheiten Bediengrößen eingestellt, die an die zugeordneten Aktoren zu deren Beeinflussung übertragen werden. Die Übertragung kann drahtgebunden oder aber drahtlos z. B. per Funk erfolgen. Zur ordnungsgemäßen Installation an bzw. in einer Wand weisen solche elektrischen Installationsgeräte einen oftmals rahmenartig oder plattenförmig ausgeführten Träger auf. Somit ist eine einfache Befestigung solcher elektrischen Installationsgeräte sowohl in bzw. an einer Installationsdose oder aber direkt auf einer Wand möglich.

Durch die US 2009/0241052 A1 und die EP 2 112 641 A2 sind jeweils dem Oberbegriff des Hauptanspruches entsprechende Bedieneinheiten für die Gebäudesystemtechnik bekannt geworden. Diese Bedieneinheiten zur Beeinflussung von elektrischen Geräten der Gebäudesystemtechnik weisen jeweils eine Spannungsversorgung und mehrere weitere Funktionselemente auf. Diese Bedieneinheiten sind jeweils zur drahtlosen Übertragung von Bediengrößen mit einer geeigneten Schnittstelle ausgerüstet, um eine Beeinflussung von zumindest einem zugeordneten elektrischen Gerät vornehmen zu können. Zur Ableitung der Bediengrößen ist im Gehäuse jeweils zumindest ein, mit einer Auswerteelektronik versehener Beschleunigungssensor angeordnet, welcher als Referenz für die Ableitung von Bediengrößen zumindest gemessene Werte des Gravitationsfeldes der Erde heranzieht.

Zudem ist durch den FUNK-TASTER CONNECT MOVE der Firma Merten, ausgezeichnet im Jahre 2006 mit dem Good Design Award, eine weitere Bedieneinheit für die Gebäudesystemtechnik bekannt geworden. Bei dieser elektrischen Bedieneinheit handelt es sich um einen mobilen, batteriebetriebenen Funksender, der zur Halterung einem auf einer Gebäudewand angebrachten Träger zugeordnet werden kann. Durch Tastendruck bzw. Drücken des Gehäuses des Mobilteils lassen sich zugeordnete elektrische Geräte bedienen.

Zudem ist es durch die US 2010/0162160 A1 bei einer Bedieneinheit für die Gebäudesystemtechnik bekannt, dass des Gehäuses eine wiederaufladbare Batterie angeordnet sein kann. Zur kabellosen Übertragung ist eine Funkeinrichtung nach Zigbee-Standard vorgesehen, um ferngesteuert zugehörige Geräte beeinflussen zu können. Alternativ kann zur Energieversorgung am Gehäuse dieser Bedieneinheit eine Solarzelle vorgesehen sein.

Aus anderen allgemein üblichen Anwendungen ist es auch bekannt, Drehsteller zur Bedienung vorzusehen, um zum Beispiel einen Drehdimmer zu realisieren. Solchermaßen ausgebildete Bedieneinheiten bestehen üblicherweise zumindest aus einem feststehenden Teil und mehreren beweglich miteinander in Wirkverbindung kommenden Funktionskomponenten, wodurch zum einen mechanische Freiheitsgrade limitiert sind und zum anderen Verschleiß an den beweglich miteinander in Wirkverbindung kommenden Bauteilen entsteht.

Ausgehend von derart ausgebildeten Bedieneinheiten liegt der vorliegenden Erfindung die Aufgabe zugrunde, eine Bedieneinheit zu schaffen, welche größtmögliche mechanische Freiheitsgrade bietet, was Beweglichkeit und Anordnung angeht und bei der die beweglich miteinander in Wirkverbindung kommenden Bauteile auf ein Minimum beschränkt sind, um Verschleiß weitgehend zu vermeiden.

Erfindungsgemäß wird diese Aufgabe durch die im Hauptanspruch angegebenen Merkmale gelöst.

Bei einer solchen Ausbildung ist besonders vorteilhaft, dass die Bedieneinheit auf besonders einfache und kostengünstige Art und Weise robust bzw. voll verkapselt und somit wasser- und staubdicht ausgeführt werden kann. Zudem sind auf einfache Art und Weise besonders kompakt ausführbare Bauformen zu realisieren. Außerdem ist besonders vorteilhaft, dass der Benutzer die mobil ausgeführte Bedieneinheit frei dort platzieren kann, wo er es gerne möchte.

Weitere vorteilhafte Ausgestaltungen des erfindungsgemäßen Gegenstandes sind in den Unteransprüchen angegeben. Anhand mehrerer Ausführungsbeispiele sei die Erfindung im Prinzip näher erläutert. Dabei zeigen:

Fig. 1: prinziphaft eine erste Ausführungsform einer solchen Bedieneinheit räumlich;

Fig. 2: prinziphaft eine zweite Ausführungsform einer solchen Bedieneinheit räumlich;

Fig. 3: prinziphaft eine erste Ausführungsform einer Leiterplatte L als Blockschaltbild zur Verwendung in Bedieneinheiten gemäß Ausführung nach Figur 1 oder Figur 2;

Fig. 4: prinziphaft eine gemäß Figur 3 ausgeführte Spannungsversorgung mit Solarzelle, als Blockschaltbild im Detail;

Fig. 5: prinziphaft eine gemäß Figur 3 ausgeführte Spannungsversorgung mit Ladespule, als Blockschaltbild im Detail;

Fig. 6 prinziphaft eine dritte Ausführungsform einer solchen Bedieneinheit räumlich;

Fig. 7      prinziphaft eine zweite Ausführungsform einer Leiterplatte L als Blockschaltbild zur Verwendung in Bedieneinheiten gemäß Ausführung nach Figur 6;

Fig. 8      prinziphaft eine gemäß Figur 4 ausgeführte Spannungsversorgung mit Ladespule sowie Kommunikationseinrichtung mit Sensorelement;

Fig. 9      prinziphaft eine vierte Ausführungsform einer solchen Bedieneinheit im Schnitt.

Wie aus den Zeichnungen hervorgeht, besteht eine derartige Bedieneinheit im Wesentlichen aus einem Gehäuse 1, in dem eine Spannungsversorgung 2 und eine zur drahtlosen Übertragung von Bediengrößen vorgesehene Schnittstelle 3 angeordnet sind. Zur Ableitung von Bediengrößen ist im Gehäuse 1 zudem ein mit einer Auswerteelektronik 4 versehener Beschleunigungssensor 5 angeordnet, welcher als Referenz für die Ableitung von Bediengrößen gemessene Werte des Gravitationsfeldes der Erde heranzieht. Wie des weiteren aus den Figuren hervorgeht, ist im Gehäuse 1 eine Leiterplatte L angeordnet, die mit der einen Energiespeicher 2b aufweisenden Spannungsversorgung 2 in Verbindung steht und auf welcher die zur drahtlosen Übertragung von Bediengrößen bzw. von Informationen vorgesehene Schnittstelle 3, die Auswerteelektronik 4 und der Beschleunigungssensor 5 angeordnet sind. Die Auswerteelektronik 4 enthält einen Mikrocontroller 4a, der ebenfalls auf der Leiterplatte L angeordnet ist. Außerdem wird durch den Beschleunigungssensor 5 auch die Neigung der Bedieneinheit festgestellt.

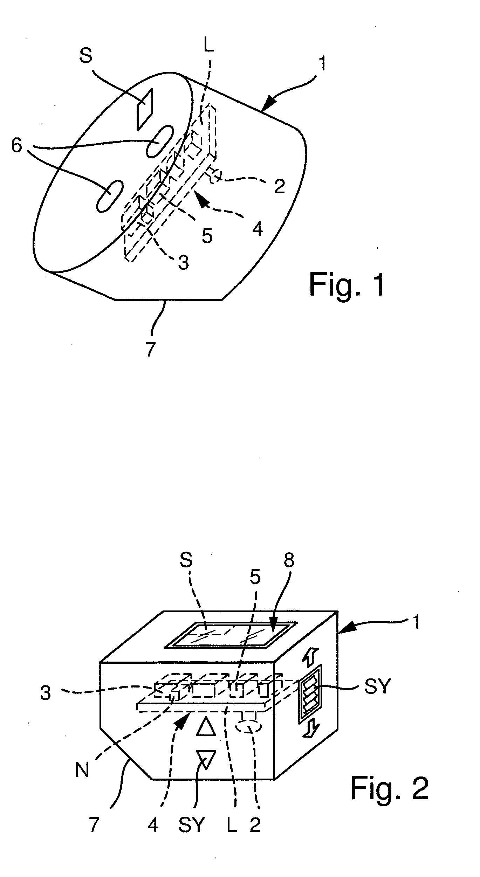

Wie insbesondere aus Figur 1 hervorgeht, ist das Gehäuse 1 der Bedieneinheit im Wesentlichen zylinderförmig ausgebildet. Auf einer seiner beiden Endflächen sind zwei als kapazitive Schaltflächen ausgeführte Schaltelemente 6 und eine Solarzelle S vorhanden, die funktional mit der im Gehäuse 1 angeordneten Leiterplatte L in Verbindung stehen. An einer Stelle des Gehäuses 1 ist eine Endfläche und die angrenzende Mantelfläche mit einer Abflachung 7 versehen. Die Abflachung 7 dient dazu, das Bediengerät auf einfache und bequeme Art und Weise zum Beispiel auf einem Tisch in einer definierten Ruheposition ablegen zu können. Die Lage der Ruheposition wird auch durch den Beschleunigungssensor 5 festgestellt, weil dieser geeignet ist, ein Verkippen der Bedieneinheit aus einer der drei senkrecht zur Erdbeschleunigung stehenden Drehachsen zu erfassen. Befindet sich die Bedieneinrichtung für einen bestimmten Zeitraum bewegungslos an einer Stelle, wird die Betriebsart automatisch auf einem Strom sparenden Stand by Betrieb umgeschaltet.

Wie insbesondere aus Figur 2 hervorgeht, ist das Gehäuse 1 der Bedieneinheit im Wesentlichen würfelförmig ausgebildet. Eine seiner sechs Hauptflächen ist mit einem Display 8 mit integrierter Solarzelle S ausgerüstet, welches zudem zur Bedienung von zugeordneten elektrischen Geräten und zur Information des Benutzers dient. Das Display 8 und somit auch die Solarzelle S stehen funktional mit der im Gehäuse 1 angeordneten Leiterplatte L in Verbindung. Eine Ecke des Gehäuses 1 weist eine Abflachung 7 auf. Die Abflachung 7 dient dazu, das Bediengerät auf einfache und bequeme Art und Weise zum Beispiel auf einem Tisch in einer definierten Ruheposition ablegen zu können. Die Lage der Ruheposition wird durch einen separaten Neigungssensor N festgestellt. Befindet sich die Bedieneinrichtung für einen bestimmten Zeitraum bewegungslos an einer Stelle, wird die Betriebsart automatisch auf einem Strom sparenden Stand by Betrieb umgeschaltet. An den Außenflächen ist das Gehäuse 1 mit mehreren die beeinflussbaren elektrischen Geräte kennzeichnenden Symbolen SY versehen.

Sowohl die Solarzelle S gemäß Figur 1, als auch die Solarzelle S gemäß Figur 2 sind jeweils zum Aufladen des zur Spannungsversorgung 2 gehörigen Energiespeichers 2b vorgesehen.

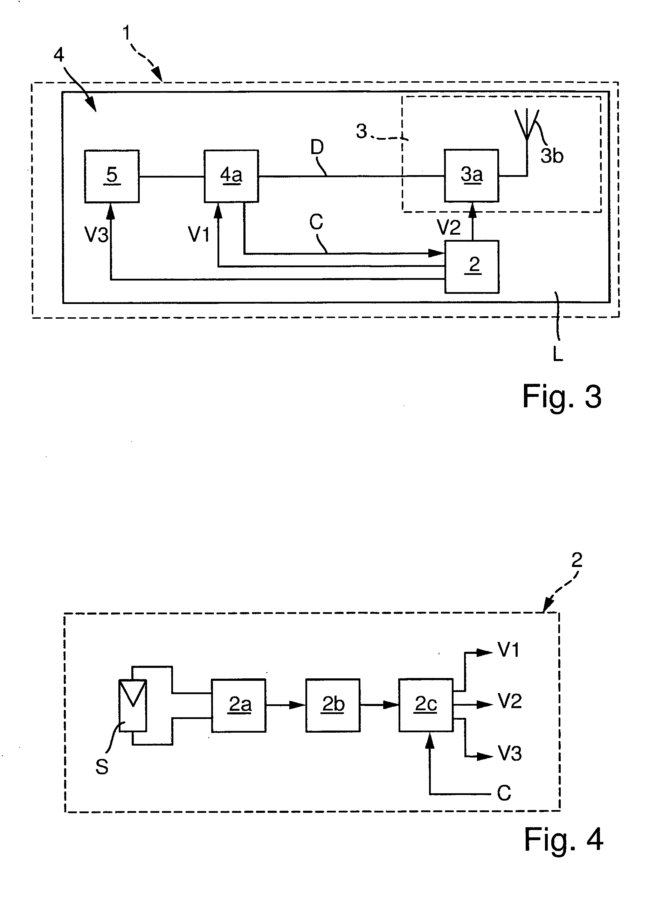

Wie insbesondere näher aus Figur 3 hervorgeht, steht der Mikrocontroller 4a über eine Steuerleitung C und eine erste Versorgungsleitung V1 mit der Spannungsversorgung 2 in Verbindung. Außerdem ist der Mikrocontroller 4a über eine Datenleitung D mit der zur drahtlosen Übertragung von Bediengrößen bzw. Informationen vorgesehenen Schnittstelle 3 verbunden. Die Spannungsversorgung 2 steht außerdem über eine zweite Versorgungsleitung V2 mit dieser Schnittstelle 3 und über eine dritte Versorgungsleitung V3 mit dem zum Messen von Werten des Gravitationsfeldes der Erde vorgesehenen Beschleunigungssensor 5 in Verbindung. Wie weiterhin aus der Figur 3 hervorgeht, ist die Schnittstelle 3 dazu vorgesehen, über eine Funkverbindung eine Kommunikation mit einem übergeordneten System bzw. zugeordneten elektrischen Geräten aufzunehmen. Aus diesem Grund weist die Schnittstelle 3 einen Funk-Transceiver 3a und eine Funkantenne 3b auf.

Wie insbesondere aus Figur 4 hervorgeht, steht die Spannungsversorgung 2 mit der Solarzelle S in Verbindung, welche auf einer Außenseite des Gehäuses 1 angeordnet ist. Es ist eine erste Anpassungsschaltung 2a vorgesehen, welche zur Adaption der Solarzelle S an den Energiespeicher 2b vorgesehen ist. Zudem ist eine zweite Anpassungsschaltung 2c vorgesehen, welche ein Energiemanagement enthält, was dazu vorgesehen ist, die einzelnen Funktionselemente der Bedieneinheit nur genau dann mit Energie zu versorgen, wenn dies erforderlich ist um dadurch den Energiebedarf erheblich zu reduzieren. Ausgehend von der zweiten Anpassungsschaltung 2c gehen die drei Versorgungsleitungen V1, V2, V3 - wie bereits beschrieben - zur Schnittstelle 3, zum Mikrokontroller 4a und zum Beschleunigungssensor 5. Außerdem geht von der zweiten Anpassungsschaltung 2c die Steuerleitung C zum Mikrokontroller 4a ab.

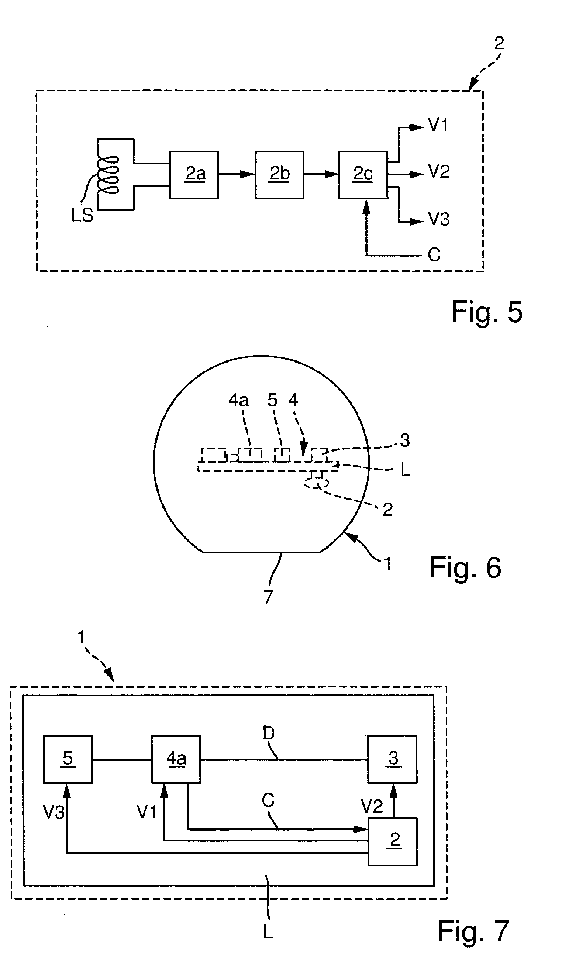

Wie insbesondere aus Figur 5 hervorgeht, kann bei der Spannungsversorgung 2 anstatt einer Solarzelle S auch eine Ladespule LS vorgesehen sein. Es ist eine erste Anpassungsschaltung 2a vorgesehen, welche zur Adaption der Ladespule LS an den Energiespeicher 2b vorgesehen ist. Zudem ist eine zweite Anpassungsschaltung 2c vorgesehen, welche ein Energiemanagement enthält, was dazu vorgesehen ist, die einzelnen Funktionselemente der Bedieneinheit nur genau dann mit Energie zu versorgen, wenn dies erforderlich ist, um dadurch den Energiebedarf erheblich zu reduzieren. Ausgehend von der zweiten Anpassungsschaltung 2c gehen die drei Versorgungsleitungen V1, V2, V3 - wie bereits beschrieben - zur Schnittstelle 3, zum Mikrokontroller 4a und zum Beschleunigungssensor 5. Außerdem geht von der zweiten Anpassungsschaltung 2c die Steuerleitung C zum Mikrokontroller 4a ab.

Wie insbesondere aus Figur 6 hervorgeht, ist das Gehäuse 1 der Bedieneinheit im Wesentlichen kugelförmig ausgebildet. Das Gehäuse 1 weist eine Abflachung 7 auf. Die Abflachung 7 dient dazu, das Bediengerät auf einfache und bequeme Art und Weise zum Beispiel auf einem Tisch in einer definierten Ruheposition ablegen zu können. Die Lage der Ruheposition wird auch durch den Beschleunigungssensor 5 festgestellt, weil dieser geeignet ist, ein Verkippen der Bedieneinheit aus einer der drei senkrecht zueinander stehenden Drehachsen zu erfassen. Befindet sich die Bedieneinrichtung für einen bestimmten Zeitraum in ihrer Ruheposition, wird die Betriebsart automatisch auf einem Strom sparenden Stand by Betrieb umgeschaltet. Zur Ladung des Energiespeichers weist die Spannungsversorgung 2 eine Ladespule LS auf. Zudem ist zur drahtlosen Übertragung von Bediengrößen bzw. Informationen eine Schnittstelle 3 vorgesehen, die nach dem optischen Prinzip arbeitet.

Wie insbesondere näher aus Figur 7 hervorgeht, steht der Mikrokontroller 4a über eine Steuerleitung C und eine erste Versorgungsleitung V1 mit der Spannungsversorgung 2 in Verbindung. Außerdem ist der Mikrokontroller 4a über eine Datenleitung D mit der zur drahtlosen Übertragung von Bediengrößen bzw. Informationen vorgesehenen Schnittstelle 3 verbunden. Die Spannungsversorgung 2 steht außerdem über eine dritte Versorgungsleitung V3 mit dem zum Messen von Werten des Gravitationsfeldes der Erde vorgesehenen Beschleunigungssensor 5 und über eine zweite Versorgungsleitung V2 mit der Schnittstelle 3 in Verbindung. Die Schnittstelle 3 gemäß Figur 7 ist dazu vorgesehen, über eine optische Verbindung eine Kommunikation mit einem übergeordneten System bzw. zugeordneten elektrischen Geräten aufzunehmen.

Bei einer voll vergossenen Ausführung der Bedieneinheit ist eine Integration von Schaltelementen technologisch nur bedingt möglich. Da jedoch in bestimmten Situationen (Einlernen, Umschaltung der Betriebsmodi, usw.) ein Stimulus nötig ist, wird dieser mittels besonderer Bedienung der Bedieneinheit realisiert. Der freie Fall kann dann eindeutig reproduzierbar durch den Beschleunigungssensor 5 ermittelt werden, da nur während des freien Falls alle drei Beschleunigungsachsenwerte null sind. Um ein Fehlauslösen von Sonderfunktionen bei einem zufälligen Fallenlassen der Bedieneinheit auszuschließen, wird die mehrmalige Erkennung des freien Falls innerhalb einer bestimmten Zeiteinheit als Auslösung von Sonderfunktionen genutzt. Das Klopfen auf die Bedieneinheit durch den Benutzer führt zu einem reproduzierbaren Anstieg der Beschleunigungswerte über die Erdbeschleunigungswerte, die ebenfalls eindeutig durch den Beschleunigungssensor 5 festgestellt werden können. Des Weiteren ist das Klopfen als ein sehr kurzzeitiger Impuls wahrnehmbar, welches sehr charakteristisch ist und dadurch eine einfache Erkennung erlaubt und sich somit für die Realisierung von Sonderfunktionen anbietet.

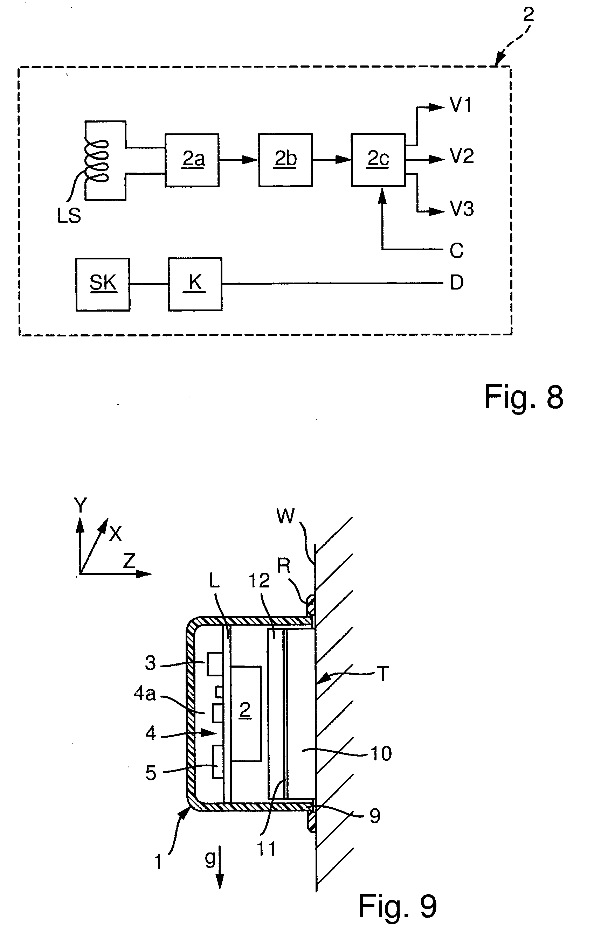

Wie insbesondere näher aus Figur 8 hervorgeht, besitzt die Bedieneinheit, wie bereits in Figur 5 dargestellt, eine Vorrichtung, um sie drahtlos mit Hilfe der magnetischen Kopplung mit Energie zu versorgen. Zusätzlich zur Ladespule LS ist noch eine Kommunikationseinrichtung K mit einem Sensorelement SK vorgesehen, welche ebenfalls magnetisch (wie Passiv-RFID-Transponder) mit dem zu steuernden System bzw. den zuzuordnenden elektrischen Geräten kommuniziert. In dieser Konfiguration kann das Einlernen sowie ein weiterer Datenaustausch dezidiert mit einer sich in unmittelbarer Nähe platzierten Kommunikationseinrichtung des Systems bzw. des zuzuordnenden elektrischen Gerätes erfolgen.

Wie insbesondere aus Figur 9 hervorgeht, ist das Gehäuse 1 der Bedieneinheit im Wesentlichen zylinderförmig ausgebildet und zur Kopplung mit einem Träger T vorgesehen. Die dem Träger T zugeordnete Endfläche ist mit einem ringförmigen Ansatz 9 versehen, um mit dem entsprechend ausgebildeten Träger T zusammenzuwirken. Dabei ist vorgesehen, dass die Bedieneinheit drehbeweglich am Träger T gelagert ist. Der Träger T ist mit einem Permanentmagneten 10 ausgerüstet, der zur Verringerung der Gleitreibung mit einem aus Kunststoff bestehenden Gleitelement 11 beschichtet ist. Im Innenraum des Gehäuses 1 der Bedieneinheit ist die Leiterplatte L angeordnet, welche einerseits mit dem Beschleunigungssensor 5 und zugehöriger Auswerteelektronik 4, und welche andererseits mit der Spannungsversorgung 2 versehen ist. Außerdem ist ein Element 12 aus ferromagnetischem Material im Gehäuse 1 untergebracht, um eine sichere Lagerung der Bedieneinheit am Träger T zu gewährleisten. Um eine besonders robuste Ausführungsform zu realisieren, ist der Innenraum des Gehäuses 1 vollständig mit einer Vergussmasse ausgefüllt. Befindet sich die Bedieneinheit am Träger T, wird diese Lage als Ruheposition durch den Beschleunigungssensor 5 festgestellt und bei Beibehaltung dieser Lage für einen bestimmten Zeitraum die Betriebsart automatisch auf einen Strom sparenden Stand by Betrieb umgeschaltet. Ebenfalls wird über den Beschleunigungssensor 5 festgestellt, in welche Richtung die am Träger T gelagerte Bedieneinheit verstellt bzw. verdreht wurde. Im vorliegenden Fall ist die Bedieneinheit dazu vorgesehen, den Dimmgrad von Beleuchtungseinrichtungen zu beeinflussen. Ein Verdrehen in die eine bzw. andere Richtung bedeutet in diesem Zusammenhang, dass die Beleuchtungseinrichtung ausgehend von ihrem Aus-Zustand mit entsprechenden Zwischenwerten bis auf ihre maximale Helligkeit eingestellt bzw. von ihrer maximalen Helligkeit mit entsprechenden Zwischenwerten wieder auf ihren Aus-Zustand eingestellt werden kann.

Im quasistationären Betriebsfall, also wenn die Bedieneinheit ruhig steht oder langsam bewegt wird, gilt

$$\sqrt{x^2 + y^2 + z^2} \approx g$$

, wobei x, y und z die Komponenten der gemessenen Beschleunigung und $g \approx 9.81$ $m/s^2$ die Gravitationsfeldkonstante der Erde sind, die mit der geographischen Lage auf der Erdoberfläche leicht variiert. Aus den Werten der einzelnen Komponenten x, y und z lassen sich die Winkel bestimmen, die der Beschleunigungssensor hinsichtlich des Gravitationsvektors der Erde einnimmt. Ist der Sensor beispielsweise parallel zu x-y-Ebene flach an einer vertikal stehenden Wand W montiert, so ist die z-Komponente näherungsweise 0 und damit $\sqrt{x^2 + y^2} \approx g$ . Die Orientierung der Platine, und damit die Orientierung der Bedieneinheit zum Erdmittelpunkt, kann man somit über trigonometrische Funktionen bestimmen. Berührt der Benutzer die Bedieneinheit, so wird über kapazitive Schaltflächen die Bedieneinheit aktiviert, der Drehwinkel zyklisch gemessen und ausgewertet und bei Bedarf daraus abgeleitete Steuerinformationen an die Aktoren übermittelt. Sofern die z-Komponente einen Schwellwert überschreitet, wird ein Verlassen des Normalbetriebs erkannt. Dies führt im Regelfall dazu, dass keine vom Drehwinkel abhängigen neuen Steuerinformationen an die Aktoren mehr übermittelt werden. Notwendig ist dieses Verhalten, damit man die Bedieneinheit ohne ungewollte Auswirkungen auf die Aktoren transportieren oder ablegen kann.

**Bezugszeichenliste:**

1 Gehäuse
2 Spannungsversorgung
2a erste Anpassungsschaltung
2b Energiespeicher
2c zweite Anpassungsschaltung
3 Schnittstelle
3a Funk-Transceiver
3b Funkantenne
4 Auswerteelektronik
4a Mikrocontroller
5 Beschleunigungssensor
6 Schaltelemente
7 Abflachung
8 Display
9 Ansatz
10 Permanentmagnet
11 Gleitelement
12 Element

C Steuerleitung
D Datenleitung
K Kommunikationseinrichtung
L Leiterplatte
LS Ladespule
N Neigungssensor
R Abdeckrahmen
S Solarzelle
SK Sensorelement
SY Symbol
T Träger
V1 erste Versorgungsleitung
V2 zweite Versorgungsleitung
V3 dritte Versorgungsleitung
W Wand

**Patentansprüche**

1. Bedieneinheit für elektrische Geräte der Gebäudesystemtechnik mit einem Gehäuse (1), in dem eine Spannungsversorgung (2), mehrere weitere Funktionselemente und eine zur drahtlosen Übertragung von Bediengrößen geeignete Schnittstelle (3) angeordnet sind, um eine Beeinflussung von zumindest einem zugeordneten elektrischen Gerät vornehmen zu können, wobei zur Ableitung der Bediengrößen im Gehäuse (1) zumindest ein, mit einer Auswerteelektronik (4) versehener Beschleunigungssensor (5) angeordnet ist, welcher als Referenz für die Ableitung von Bediengrößen zumindest gemessene Werte des Gravitationsfeldes der Erde heranzieht, **dadurch gekennzeichnet, dass** das Gehäuse (1) zur beweglichen Anordnung an einem Träger (T) vorgesehen ist und dass zur beweglichen Anordnung an einem Träger (T) zumindest ein Permanentmagnet (10) vorgesehen ist und dass der Innenraum des Gehäuses (1) zumindest teilweise mit einer Vergussmasse ausgefüllt ist.

2. Bedieneinheit nach Anspruch 1, **dadurch gekennzeichnet, dass** im Gehäuse (1) zumindest ein Neigungssensor (N) untergebracht ist.

3. Bedieneinheit nach Anspruch 1 oder 2, **dadurch gekennzeichnet, dass** am Gehäuse zumindest ein Schaltelement (6) vorhanden ist.

4. Bedieneinheit nach einem der Ansprüche 1 bis 3, **dadurch gekennzeichnet, dass** zur Energieversorgung im Gehäuse (1) zumindest ein als Batterie ausgeführter Energiespeicher (2b) untergebracht ist.

**5.** Bedieneinheit nach einem der Ansprüche 1 bis 4, **dadurch gekennzeichnet, dass** zur Energieversorgung am Gehäuse (1) zumindest eine, den Energiespeicher (2b) versorgende, Solarzelle (S) angebracht ist.

**6.** Bedieneinheit nach einem der Ansprüche 1 bis 5, **dadurch gekennzeichnet, dass** zur Energieversorgung im Gehäuse (1) zumindest eine, den Energiespeicher versorgende, magnetische Wechselfeldeinrichtung vorhanden ist.

**7.** Bedieneinheit nach einem der Ansprüche 1 bis 6, **dadurch gekennzeichnet, dass** die zur drahtlosen Übertragung vorgesehene Schnittstelle (3) über eine Funkverbindung mit einem zugeordneten elektrischen Gerät und/oder einem übergeordneten System kommuniziert.

**8.** Bedieneinheit nach einem der Ansprüche 1 bis 6, **dadurch gekennzeichnet, dass** die zur drahtlosen Übertragung vorgesehene Schnittstelle (3) über eine optische Verbindung mit einem zugeordneten elektrischen Gerät und/oder einem übergeordneten System kommuniziert.

**9.** Bedieneinheit nach einem der Ansprüche 1 bis 6, **dadurch gekennzeichnet, dass** die zur drahtlosen Übertragung vorgesehene Schnittstelle (3) über eine magnetische Kopplung mit einem zugeordneten elektrischen Gerät und/oder einem übergeordneten System kommuniziert.

**10.** Bedieneinheit nach einem der Ansprüche 1 bis 9, **dadurch gekennzeichnet, dass** im Gehäuse (1) eine auf Berührung reagierende Aufweckeinrichtung vorhanden ist.

**11.** Bedieneinheit nach einem der Ansprüche 1 bis 10, **dadurch gekennzeichnet, dass** das Gehäuse (1) mit mehreren die beeinflussbaren elektrischen Geräte kennzeichnenden Symbolen (SY) versehen ist.

**12.** Bedieneinheit nach einem der Ansprüche 1 bis 11, **dadurch gekennzeichnet, dass** zumindest eine Außenfläche des Gehäuses (1) mit einem Display (8) versehen ist.

**13.** Bedieneinheit nach einem der Ansprüche 1 bis 12, **dadurch gekennzeichnet, dass** zumindest eine Außenfläche des Gehäuses (1) eine Gestaltung in Art einer Abflachung (7) aufweist, über welche eine definierte Ablage in eine Ruheposition ermöglicht ist.

**14.** Bedieneinheit nach einem der Ansprüche 1 bis 13, **dadurch gekennzeichnet, dass** mittels des Beschleunigungssensors (5) durch Klopfen erzeugte Beschleunigungswerte feststellbar sind.

**15.** Bedieneinheit nach einem der Ansprüche 1 bis 14, **dadurch gekennzeichnet, dass** mittels des Beschleunigungssensors (5) die drei senkrecht zur Erdbeschleunigung verlaufenden Drehachsen feststellbar sind.

**16.** Bedieneinheit nach einem der Ansprüche 1 bis 15, **dadurch gekennzeichnet, dass** der Beschleunigungssensor (5) mit einer, durch Verkippen der Bedieneinheit aus zumindest einer seiner senkrecht zur Erdbeschleunigung stehenden Drehachsen aktivierbaren, Funktionsverriegelungseinheit in Verbindung steht.

**17.** Bedieneinheit nach einem der Ansprüche 1 bis 16, **dadurch gekennzeichnet, dass** im Gehäuse (1) eine, die Dauer eines freien Falls sensierende Erkennungseinrichtung vorhanden ist.

**Claims**

**1.** Control module for electrical devices in building system engineering, having a housing (1) in which a power supply (2), several additional functional elements, and an interface suitable for the wireless transmission of control variables are arranged so as to be able to make an influence on at least one designated electrical device, for which purpose at least one acceleration sensor (5) provided with analysis electronics (4) is disposed for discharging the control variables in the housing (1) using at least measured values from the earth's gravitation field as a reference for discharging control variables, **characterised in that** the housing (1) is provided for a moveable arrangement on a carrier (T) and that at least one permanent magnet (10) is provided for the moveable arrangement on a carrier (T) and that the interior of the housing (1) is at least partially filled with a resin compound.

**2.** Control module according to Claim 1, **characterised in that** at least one inclinometer (N) is accommodated in the housing (1).

**3.** Control module according to Claim 1 or Claim 2, **characterised in that** at least one switching element (6) is provided on the housing.

**4.** Control module according to any of Claims 1 to 3, **characterised in that** at least one energy storage device (2b) designed as a battery is accommodated in the housing (1) for power supply purposes.

**5.** Control module according to any of Claims 1 to 4, **characterised in that** at least one solar cell (S) for supplying the energy storage device (2b) is attached to the housing (1) for power supply purposes.

6. Control module according to any of Claims 1 to 5, **characterised in that** at least one alternating magnetic field facility for supplying the energy storage device is provided in the housing for power supply purposes.

7. Control module according to any of Claims 1 to 6, **characterised in that** the interface (3) provided for wireless transmission communicates with an allocated electrical device and/or with a higher-level system by way of a wireless connection.

8. Control module according to any of Claims 1 to 6, **characterised in that** the interface (3) provided for wireless transmission communicates with an allocated electrical device and/or with a higher-level system by way of an optical connection.

9. Control module according to any of Claims 1 to 6, **characterised in that** the interface (3) provided for wireless transmission communicates with an allocated electrical device and/or with a higher-level system by way of a magnetic coupling.

10. Control module according to any of Claims 1 to 9, **characterised in that** a wake-up facility that responds to touch is provided in the housing (1).

11. Control module according to any of Claims 1 to 10, **characterised in that** the housing (1) is provided with several symbols (SY) signifying the electrical devices that can be influenced.

12. Control module according to any of Claims 1 to 11, **characterised in that** at least one external surface of the housing (1) is provided with a display device (8).

13. Control module according to any of Claims 1 to 12, **characterised in that** at least one external surface of the housing (1) shows a construction like a flattened section (7) by means of which a defined repository is enabled in an idle position.

14. Control module according to any of Claims 1 to 13, **characterised in that** acceleration values generated by tapping can be determined by means of the acceleration sensor (5).

15. Control module according to any of Claims 1 to 14, **characterised in that** the three axes of rotation running perpendicular to the earth's acceleration can be determined by means of the acceleration sensor (5).

16. Control module according to any of Claims 1 to 15, **characterised in that** the acceleration sensor (5) communicates with a function locking unit that can be activated by tilting the control module from at least one of its axes of rotation positioned perpendicular to the earth's acceleration.

17. Control module according to any of Claims 1 to 16, **characterised in that** a detection facility is provided in the housing (1) which senses the duration of a free fall.

**Revendications**

1. Unité de commande pour appareils électriques de la gestion technique du bâtiment avec un boîtier (1) dans lequel sont disposés une alimentation en tension (2), plusieurs autres éléments fonctionnels et une interface (3) adaptée à la transmission sans fil de données de commande pour pouvoir exercer une influence sur au moins un appareil électrique affecté, au moins un capteur d'accélération (5) doté d'une électronique d'évaluation (4) étant prévu pour dériver les données de commande dans le boîtier (1), ce capteur utilisant comme référence pour la dérivation de données de commande au moins des valeurs mesurées du champs de gravitation terrestre, **caractérisée en ce que** le boîtier (1) est prévu pour pouvoir se déplacer sur un support (T) et qu'au moins un aimant permanent (10) est prévu pour le déplacement sur un support (T) et que l'intérieur du boîtier est rempli, au moins partiellement, d'une masse de scellement.

2. Unité de commande selon revendication 1 **caractérisée en ce qu'**au moins un capteur d'inclinaison est logé dans le boîtier (1).

3. Unité de commande selon revendication 1 ou 2 **caractérisée en ce qu'**il y a au moins un élément de commutation dans le boîtier (1).

4. Unité de commande selon revendication 1 à 3 **caractérisée en ce qu'**au moins un accumulateur d'énergie (2b) exécuté comme une pile destinée à l'alimentation en énergie est logé dans le boîtier (1).

5. Unité de commande selon revendication 1 à 4 **caractérisée en ce qu'**au moins une cellule solaire (S) alimentant l'accumulateur d'énergie (2b) pour l'alimentation en énergie est logé dans le boîtier (1).

6. Unité de commande selon revendication 1 à 5 **caractérisée en ce qu'**il y a au moins un dispositif à champ magnétique alternatif alimentant l'accumulateur d'énergie pour l'alimentation en énergie dans le boîtier (1).

7. Unité de commande selon revendication 1 à 6 **caractérisée en ce que** l'interface (3) prévue pour la transmission sans fil communique via une liaison radio avec un appareil électrique affecté et/ou un système supérieur.

8.  Unité de commande selon revendication 1 à 6 **caractérisée en ce que** l'interface (3) prévue pour la transmission sans fil communique via une liaison optique avec un appareil électrique affecté et/ou un système supérieur.

9.  Unité de commande selon revendication 1 à 6 **caractérisée en ce que** l'interface (3) prévue pour la transmission sans fil communique via un accouplement magnétique avec un appareil électrique affecté et/ou un système supérieur.

10.  Unité de commande selon revendication 1 à 9 **caractérisée en ce qu'**il y a un dispositif d'éveil réagissant au contact dans le boîtier (1).

11.  Unité de commande selon revendication 1 à 10 **caractérisée en ce que** le boîtier (1) est doté de plusieurs symboles (SY) marquant les appareils électriques influençables.

12.  Unité de commande selon revendication 1 à 11 **caractérisée en ce qu'**au moins une surface externe du boîtier (1) est dotée d'un écran (8).

13.  Unité de commande selon revendication 1 à 12 **caractérisée en ce qu'**au moins une surface externe du boîtier (1) présente une configuration de type méplat (7) permettant une dépose définie dans une position de repos.

14.  Unité de commande selon revendication 1 à 13 **caractérisée en ce que** le capteur d'accélération (5) peut enregistrer des valeurs d'accélération générées par martèlement.

15.  Unité de commande selon revendication 1 à 14 **caractérisée en ce que** le capteur d'accélération (5) peut enregistrer les trois axes de rotation perpendiculaires à l'accélération de la pesanteur.

16.  Unité de commande selon revendication 1 à 15 **caractérisée en ce que** le capteur d'accélération (5) est en relation avec une unité de verrouillage de fonction activable par basculement de l'unité de commande, au moins depuis l'un de ses axes de rotation perpendiculaires à l'accélération de la pesanteur.

17.  Unité de commande selon revendication 1 à 16 **caractérisée en ce qu'**il y a dans le boîtier un dispositif de reconnaissance captant pendant la durée d'une chute libre.

Fig. 1

Fig. 2

Fig. 3

Fig. 4

Fig. 5

Fig. 6

Fig. 7

LS

2a → 2b → 2c → V1

V2

V3

↑

C

SK — K ——————— D

**Fig. 8**

Y
X
Z

W

L 12 R

3

4a

4

5

2

T

10

9

11

1

g

**Fig. 9**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20090241052 A1
- EP 2112641 A2

- US 20100162160 A1